# EUROPEAN PATENT APPLICATION

(11) **EP 4 806 761 A1**
(43) Date of publication of application: **16.09.2026**
(21) Application number: 25218752.1
(22) Date of filing: 26.11.2025
(51) Int. Cl.: B62B 7/14, B62B 9/10, A47D 13/02

(54) **COLLABORATIVELY FOLDABLE AND UNFOLDABLE CARRY COT AND BABY STROLLER**

(30) Priority: 29.10.2025 CN 202522301549 U
(71) Applicant: Golden Dragon Industrial Limited, Huizhou, Guangdong 516269 (CN)
(72) Inventor: CHUANG, Chang-an, Huizhou, 516269 (CN)
(74) Representative: Metida

(57) **Abstract**

Disclosed are a collaboratively foldable and unfoldable carry cot and a baby stroller, having an unfolded use state and a folded use state, including a frame assembly (1), a base frame assembly (2), a front linkage assembly (3), a rear linkage assembly (4), and a vertical slide rod (5); the front frame and the rear frame are rotatably connected via a frame joint (13), and a joint avoidance slot (1311) is provided on the front joint block (131) or the rear joint block (132), such that the front joint block or the rear joint block is rotatably and slidably constrained to the vertical slide rod; the front joint block and the rear joint block slide along the vertical slide rod, and the front joint block or the rear joint block having the joint avoidance slot rotates relative to the vertical slide rod around the joint pivot shaft of the frame joint.

## Description

### CROSS REFERENCE TO RELATED APPLICATIONS

The present disclosure claims the priority of Chinese Patent Application No. 2025223015490 filed on October 29, 2025 before CNIPA. All the above are hereby incorporated by reference in their entirety.

### TECHNICAL FIELD

The present disclosure relates to the technical field of children's travel products, particularly to a collaboratively foldable and unfoldable carry cot and a baby stroller.

### BACKGROUND

As an important component of infant travel tools, a carry cot is widely used in scenarios such as strollers, and its core requirements lie in balancing safety, comfort, and portability. Portability is mainly reflected in the carry cot needing to have a foldable function for storage and carrying; while safety requires the carry cot to have a stable structure when unfolded for use and to avoid the risk of accidental triggering or pinching during the folding process.

In the structural design of traditional carry cots, a linkage assembly is provided between the frame and the base frame, configured for moving closer together in the vertical direction, so that the frame may move closer to the corresponding base frame in the vertical direction during the folding process. Moreover, in order for the frame and the base frame to move stably along the orthographic projection direction of the frame when folding and unfolding in the vertical direction, an additional guiding mechanism is usually added to the frame joint, such as the structure disclosed in related art, where the sliders thereon are all rotatably connected to the first upper surrounding frame and the second upper surrounding frame, resulting in the frame joint being relatively complex.

Additionally, in existing carry cots, when the frame is folded, although the base frame may move closer to the frame relative to each other through the linkage assembly, but in this process, due to the lack of a synchronous linkage mechanism on the base frame, there is a problem of uncoordinated folding steps during the folding of the base frame, leading to unsmooth folding and unfolding.

For this reason, the present disclosure is proposed to address the above problems.

### SUMMARY

An objective of the present disclosure is to overcome the deficiencies of the prior art and provide a collaboratively foldable and unfoldable carry cot and a baby stroller. The front frame and the rear frame are rotatably connected via a frame joint, and a joint avoidance slot is provided on the front joint block or the rear joint block, such that the front joint block or the rear joint block is rotatably and slidably constrained to the vertical slide rod, thereby leading to the frame joint structure being more concise and compact. The front joint block and the rear joint block slide along the vertical slide rod, and the front joint block or the rear joint block having the joint avoidance slot rotates relative to the vertical slide rod around the joint pivot shaft of the frame joint, avoiding interference while also guiding the folding and unfolding actions of the front frame and the rear frame, thereby achieving smooth folding and unfolding actions, when the carry cot is folded or unfolded.

The present disclosure proposes a collaboratively foldable and unfoldable carry cot, having an unfolded use state and a folded use state, including:
a frame assembly, where the frame assembly includes a front frame and a rear frame configured to be folded towards each other or unfolded away from each other, the front frame and the rear frame are rotatably connected via a frame joint, the frame joint includes a front joint block fixedly connected to the front frame and a rear joint block fixedly connected to the rear frame and rotatably connected to the front joint block;
a base frame assembly, where the base frame assembly includes a front base frame, a base frame connecting seat, and a rear base frame, a front side of the base frame connecting seat is rotatably connected to the front base frame around a first pivot shaft, a rear side of the base frame connecting seat is rotatably connected to the rear base frame around a second pivot shaft;
a front linkage assembly, where the front linkage assembly is rotatably connected to the front frame and the front base frame respectively;
a rear linkage assembly, where the rear linkage assembly is rotatably connected to the rear frame and the rear base frame respectively; and
a vertical slide rod, where the vertical slide rod is located between the frame assembly and the base frame assembly, a lower end of the vertical slide rod is relatively fixedly connected to the base frame connecting seat, a joint avoidance slot is directly or indirectly provided on the front joint block or the rear joint block, configured to rotatably and slidably connect with the vertical slide rod; the front joint block and the rear joint block rotate together with the corresponding frame assembly around a joint pivot shaft of the frame joint, and the front joint block or the rear joint block having the joint avoidance slot both rotates relative to the vertical slide rod and slides relative to the vertical slide rod, when the carry cot is switched between the unfolded use state and the folded use state.
the joint avoidance slot is provided with an unfolding stopping wall and a folding stopping wall configured to abut against a corresponding side wall of the vertical slide rod; the carry cot is in the unfolded use state when a side wall of the vertical slide rod abuts against the unfolding stopping wall, and the carry cot is in the folded use state when an opposite side wall of the vertical slide rod abuts against the folding stopping wall.

According to the aforementioned collaboratively foldable and unfoldable carry cot, a guide sliding groove is provided on the vertical slide rod and extends along a length direction thereof, the joint pivot shaft between the front joint block and the rear joint block is inserted through the guide sliding groove and is slidable within the guide sliding groove.

According to the aforementioned collaboratively foldable and unfoldable carry cot, the front linkage assembly, the front frame, and the front base frame are connected to form a parallel four-bar mechanism, and/or the rear linkage assembly, the rear frame, and the rear base frame are connected to form a parallel four-bar mechanism, when the carry cot is in the unfolded use state.

According to the aforementioned collaboratively foldable and unfoldable carry cot, the front linkage assembly includes a first front linkage rod and a second front linkage rod arranged parallel to each other, upper ends of the first front linkage rod and the second front linkage rod are both rotatably connected to the front frame, lower ends of the first front linkage rod and the second front linkage rod are both rotatably connected to the front base frame; the first front linkage rod, the second front linkage rod, the front frame, and the front base frame are connected to form a parallel four-bar mechanism when the carry cot is in the unfolded use state; the rear linkage assembly includes a rear linkage rod, an upper end of the rear linkage rod is rotatably connected to the rear frame, a lower end of the rear linkage rod is rotatably connected to the rear base frame.

According to the aforementioned collaboratively foldable and unfoldable carry cot, a collaborative linkage member is provided between the front base frame and the rear base frame, the front end of the collaborative linkage member is rotatably connected to the front base frame around a third pivot shaft eccentric to the first pivot shaft, the rear end of the collaborative linkage member is rotatably connected to the rear base frame around a fourth pivot shaft eccentric to the second pivot shaft.

According to the aforementioned collaboratively foldable and unfoldable carry cot, a front guiding assembly is provided between the front base frame and the base frame connecting seat, the front guiding assembly includes a front guiding groove provided on the base frame connecting seat and concentrically arranged with the first pivot shaft, and a front guiding rod provided on the front base frame and slidably connected to the front guiding groove; and/or, a rear guiding assembly is provided between the rear base frame and the base frame connecting seat, the rear guiding assembly includes a rear guiding groove provided on the base frame connecting seat and concentrically arranged with the second pivot shaft, and a rear guiding rod provided on the rear base frame and slidably connected to the rear guiding groove.

According to the aforementioned collaboratively foldable and unfoldable carry cot, a joint locking assembly is provided between the front joint block and the rear joint block, configured to mutually lock the front joint block and the rear joint block, and a joint unlocking assembly is provided on the frame assembly and arranged to be linked with the joint locking assembly.

According to the aforementioned collaboratively foldable and unfoldable carry cot, the joint locking assembly includes joint locking tooth grooves provided on opposite sides of the front joint block and the rear joint block, and a joint locking gear slidably provided between the front joint block and the rear joint block and configured to simultaneously engage with the joint locking tooth grooves on the front joint block and the rear joint block; a joint locking elastic member is provided between the joint locking gear and the front joint block, configured to drive the joint locking gear to simultaneously engage with the joint locking tooth grooves on the front joint block and the rear joint block; the joint locking gear is arranged to be linked with the joint unlocking assembly.

According to the aforementioned collaboratively foldable and unfoldable carry cot, the joint unlocking assembly includes a joint unlocking operation member movably provided on the front frame, and a joint unlocking rotating block rotatably provided between the joint locking gear and the rear joint block and arranged to be linked with the joint locking gear; the joint unlocking operation member and the joint unlocking rotating block are linked via a joint unlocking linkage member.

According to the aforementioned collaboratively foldable and unfoldable carry cot, a canopy support rod, the canopy support rod is rotatably connected to the rear joint block via a support rod joint block, and a support rod locking assembly is provided between the support rod joint block and the frame joint, configured to lock the support rod joint block relative to the rear joint block.

According to the aforementioned collaboratively foldable and unfoldable carry cot, the support rod locking assembly includes a support rod locking tooth groove provided on the support rod joint block; the support rod locking assembly further includes a support rod locking slider slidably provided between the rear joint block and the joint locking gear and configured to slide with the joint locking gear, a support rod locking tooth block is provided on the support rod locking slider, configured to penetrate through the rear joint block and lockingly engage with the support rod locking tooth groove, a support rod locking elastic member is provided between the support rod locking slider and the front joint block, configured to drive the support rod locking slider to elastically reset; and a support rod unlocking button is movably provided on the outer side of the support rod joint block and arranged to be linked with the support rod locking slider.

According to the aforementioned collaboratively foldable and unfoldable carry cot, a canopy support rod, the canopy support rod is rotatably connected to the rear joint block via a support rod joint block, a support rod locking assembly is provided between the support rod joint block and the frame joint, configured to lock the support rod joint block relative to the rear joint block; a support rod unlocking button is movably provided on the outer side of the support rod joint block and arranged to be linked with the support rod locking assembly; and the joint unlocking assembly is arranged to be linked with the support rod locking assembly.

According to the abovementioned collaboratively foldable and unfoldable carry cot, the base frame connecting seat is relatively fixedly connected to a carry cot adapter configured to be detachably connected to a stroller frame adapter of a stroller frame.

Provided in the present disclosure is further a baby stroller, including a foldable stroller frame and the aforementioned collaboratively foldable and unfoldable carry cot, a stroller frame adapter is provided on the stroller frame, and a carry cot adapter is provided on the base frame connecting seat, configured to be detachably connected to the stroller frame adapter.

Compared with the prior art, the present disclosure provides the following advantages:
1. The present disclosure arranges the joint avoidance slot on the front joint block or the rear joint block, such that the front joint block or the rear joint block is rotatably and slidably constrained to the vertical slide rod, thereby leading to the frame joint structure being more concise and compact. The front joint block and the rear joint block slide along the vertical slide rod, and the front joint block or the rear joint block having the joint avoidance slot rotates relative to the vertical slide rod around the joint pivot shaft of the frame joint, avoiding interference while also guiding the folding and unfolding actions of the front frame and the rear frame, thereby achieving smooth folding and unfolding actions, when the carry cot is folded or unfolded.
2. An unfolding stopping wall is provided in the joint avoidance slot and configured to abut against one side wall of the vertical slide rod, ensuring the carry cot is stable and reliable in the unfolded use state. The limiting effect of the unfolding stopping wall further avoids the possibility of the carry cot shaking in the unfolded use state and strengthens the force-bearing capacity of the frame joint when unfolded.
3. Similarly, a folding stopping wall is provided in the joint avoidance slot and configured to abut against the other side wall of the vertical slide rod in the folded use state. The limiting effect of the folding stopping wall better restricts and indicates the folding action, preventing damage to the frame joint due to excessive folding travel.
4. The joint pivot shaft and the guide sliding groove are configured to guide and cooperate, stably constraining the motion trajectory of the frame joint sliding on the vertical slide rod, ensuring linear and smooth folding and unfolding actions.
5. The front linkage assembly, the front frame, and the front base frame are connected to form a parallel four-bar mechanism, and/or the rear linkage assembly, the rear frame, and the rear base frame are connected to form a parallel four-bar mechanism, constraining the front frame and the front base frame, as well as the rear frame and the rear base frame, to move stably during the vertical approaching or separating process, thereby leading to steady and smooth vertical approaching and separating actions of the carry cot during folding and unfolding.
6. The collaborative linkage member synchronously links the folding and unfolding actions of the base frame assembly, enabling the front base frame and the rear base frame to move synchronously, further enhancing the smooth folding and unfolding performance of the carry cot.
7. The front linkage assembly and the rear linkage assembly are connected to the frame assembly and the base frame assembly to form at least one set of parallel four-bar mechanisms, and the collaborative linkage member is provided between the front base frame and the rear base frame, respectively achieving collaborative linkage in vertical and horizontal folding and unfolding actions, leading to efficient, stable, and convenient folding and unfolding operations.
8. The joint unlocking assembly is linked with the joint locking assembly and the support rod locking assembly, and the support rod unlocking button is linked with the support rod locking assembly. The user only needs to operate the joint unlocking assembly to simultaneously unlock the joint locking assembly and the support rod locking assembly, releasing the locked state between the front joint block, the rear joint block, and the support rod joint block for folding after unlocking. The user only needs to operate the support rod unlocking button to unlock the support rod locking assembly, releasing the locked state of the support rod joint block relative to the rear joint block when adjusting the canopy support rod, thereby leading to convenient operation.

### BRIEF DESCRIPTION OF THE DRAWINGS

The specific embodiments of the present disclosure are described in further detail below with reference to the accompanying drawings.
FIG. 1 is a perspective view of the carry cot in the unfolded use state according to the present disclosure.
FIG. 2 is a side view of the carry cot in the unfolded use state according to the present disclosure.
FIG. 3 is a perspective view of the carry cot during the folding process according to the present disclosure.
FIG. 4 is a first side view of the carry cot during the folding process according to the present disclosure.
FIG. 5 is a second side view of the carry cot during the folding process according to the present disclosure.
FIG. 6 is a perspective view of the base frame assembly according to the present disclosure.
FIG. 7 is a first exploded view of the joint locking assembly according to the present disclosure.
FIG. 8 is a second exploded view of the joint locking assembly according to the present disclosure.
FIG. 9 is a first cross-sectional view of the front joint block according to the present disclosure.
FIG. 10 is a second cross-sectional view of the front joint block according to the present disclosure.
FIG. 11 is a perspective view of the baby stroller in the unfolded use state according to the present disclosure.
FIG. 12 is a perspective view of the baby stroller in the folded use state according to the present disclosure.

### DETAILED DESCRIPTION

The embodiments of the present disclosure are described in detail below with reference to the accompanying drawings.

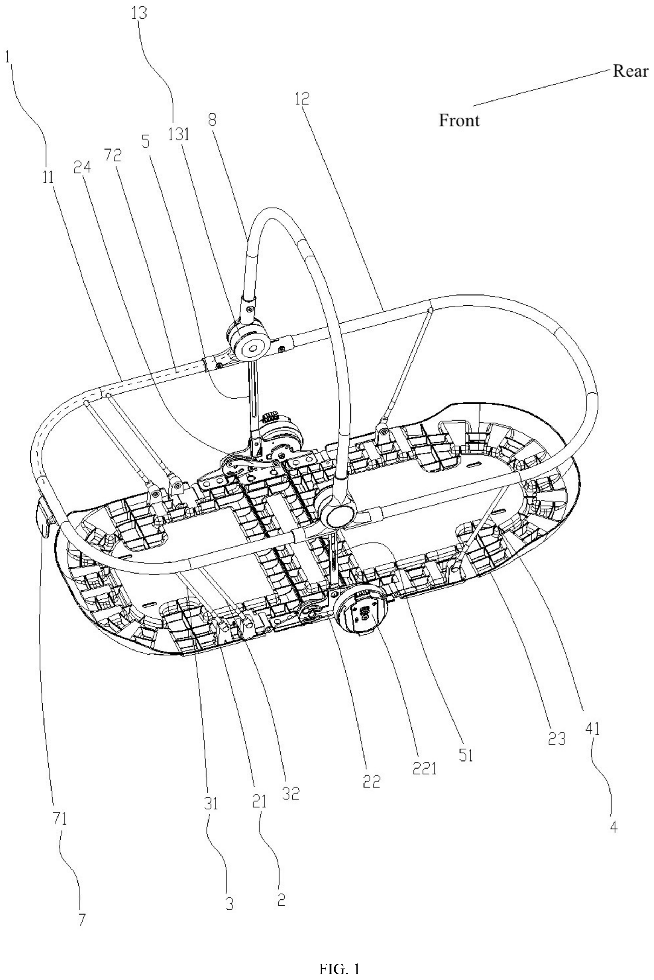

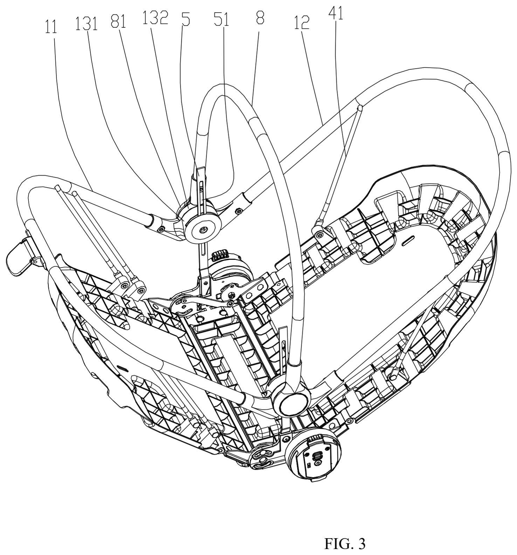

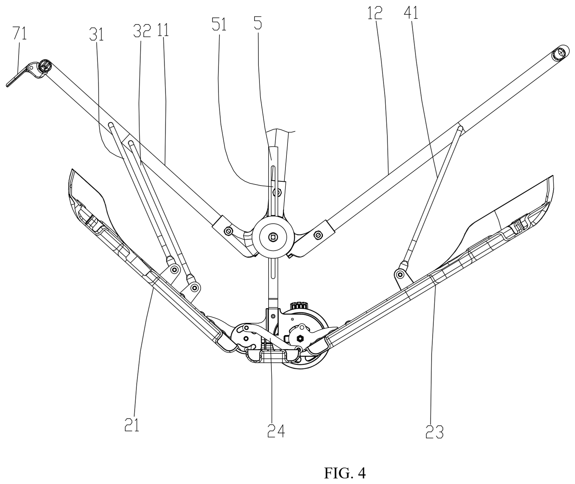

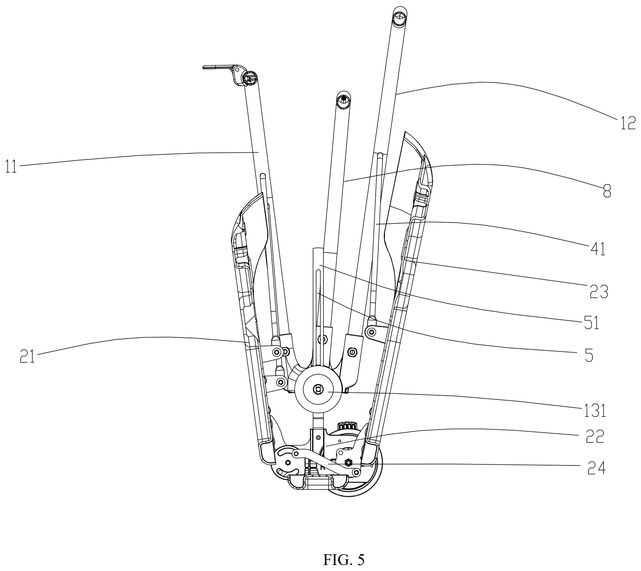

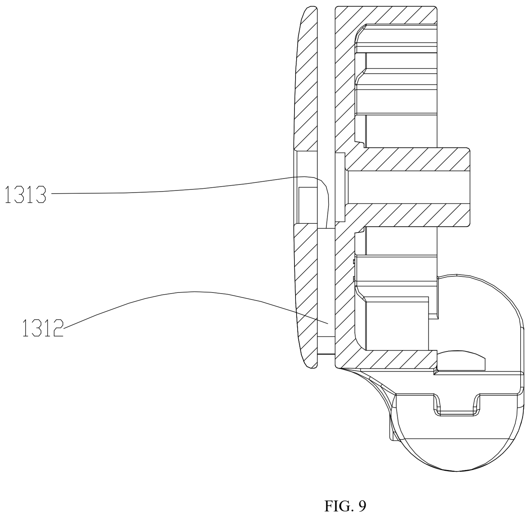

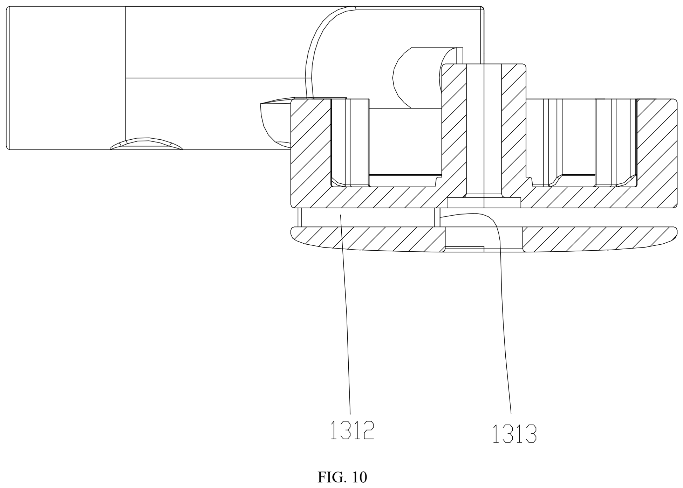

As shown in FIGS. 1-12, a collaboratively foldable and unfoldable carry cot according to the present disclosure, having an unfolded use state and a folded use state, including a frame assembly 1, a base frame assembly 2, a front linkage assembly 3, a rear linkage assembly 4, and a vertical slide rod 5. The frame assembly 1 includes a front frame 11 and a rear frame 12 configured to be folded towards each other or unfolded away from each other, the front frame 11 and the rear frame 12 are rotatably connected via a frame joint 13, the frame joint 13 includes a front joint block 131 fixedly connected to the front frame 11 and a rear joint block 132 fixedly connected to the rear frame 12 and rotatably connected to the front joint block 131; the base frame assembly 2 includes a front base frame 21, a base frame connecting seat 22, and a rear base frame 23, the front side of the base frame connecting seat 22 is rotatably connected to the front base frame 21 around a first pivot shaft A1, the rear side of the base frame connecting seat 22 is rotatably connected to the rear base frame 23 around a second pivot shaft A2; the front linkage assembly 3 is rotatably connected to the front frame 11 and the front base frame 21 respectively; the rear linkage assembly 4 is rotatably connected to the rear frame 12 and the rear base frame 23 respectively. The vertical slide rod 5 is located between the frame assembly 1 and the base frame assembly 2, the lower end of the vertical slide rod 5 is relatively fixedly connected to the base frame connecting seat 22, a joint avoidance slot 1311 is directly or indirectly provided on the front joint block 131 or the rear joint block 132, configured to rotatably and slidably connect with the vertical slide rod 5; the front joint block 131 and the rear joint block 132 rotate together with the corresponding frame assembly 1 around the joint pivot shaft 133 of the frame joint 13, and the front joint block 131 or the rear joint block 132 having the joint avoidance slot 1311 both rotates relative to the vertical slide rod 5 and slides relative to the vertical slide rod 5, when the carry cot is switched between the unfolded use state and the folded use state. In the present disclosure, the front frame and the rear frame are rotatably connected via the frame joint, and the joint avoidance slot is provided on the front joint block or the rear joint block, such that the front joint block or the rear joint block is rotatably and slidably constrained to the vertical slide rod, thereby leading to the frame joint structure being more concise and compact; the front joint block and the rear joint block slide along the vertical slide rod, and the front joint block or the rear joint block having the joint avoidance slot rotates relative to the vertical slide rod around the joint pivot shaft of the frame joint, avoiding interference while also guiding the folding and unfolding actions of the front frame and the rear frame, thereby achieving smooth folding and unfolding actions, when the carry cot is folded or unfolded.

In some embodiments, the front base frame 21 and the rear base frame 23 are of a U-shaped structure, and the U-shaped ends of the front base frame 21 and the rear base frame 23 are connected via the base frame connecting seat 22 to form a frame structure.

In some embodiments, the front base frame 21, the base frame connecting seat 22, and the rear base frame 23 are all configured as base plate structures. For example, the front base frame 21 and the rear base frame 23 are base plate structures, and the two base frame connecting seats 22 are connected via a connecting base plate to form a base plate structure.

As shown in FIGS. 1-10, the joint avoidance slot 1311 is provided with an unfolding stopping wall 1312 and a folding stopping wall 1313 configured to abut against the corresponding side wall of the vertical slide rod 5; the carry cot is in the unfolded use state when a side wall of the vertical slide rod 5 abuts against the unfolding stopping wall 1312, and the carry cot is in the folded use state when an opposite side wall of the vertical slide rod 5 abuts against the folding stopping wall 1313. In the present embodiment, in order to ensure that the carry cot is stable and reliable in the unfolded use state, an unfolding stopping wall is provided in the joint avoidance slot and configured to abut against one side wall of the vertical slide rod; through the limiting effect of the unfolding stopping wall, the possibility of the carry cot shaking in the unfolded use state is further avoided, and the force-bearing strength of the frame joint when unfolded is further enhanced.

Similarly, a folding stopping wall is provided in the joint avoidance slot and configured to abut against the other side wall of the vertical slide rod in the folded use state; through the limiting effect of the folding stopping wall, the folding action may be better restricted and indicated, preventing damage to the frame joint due to excessive folding travel.

Furthermore, in the present embodiment, the joint avoidance slot 1311 is configured as a fan-shaped structure, and two joint avoidance slots 1311 are symmetrically provided on the front joint block 131.

As shown in FIGS. 1-5, a guide sliding groove 51 is provided on the vertical slide rod 5 and extends along a length direction thereof, the joint pivot shaft 133 between the front joint block 131 and the rear joint block 132 is inserted through the guide sliding groove 51 and is slidable within the guide sliding groove 51, in order to stably constrain the sliding motion trajectory of the frame joint on the vertical slide rod, ensuring linear and smooth folding and unfolding actions.

In some embodiments, the joint pivot shaft 133 abuts against the upper end wall of the guide sliding groove 51 for blocking and limiting cooperation when the carry cot is in the unfolded use state, providing a clear unfolding stopping position for the front joint block 131 and ensuring the unfolded use state is stable, and the front joint block may only slide downward when unlocking for folding, making the unlocking direction for folding unique; the joint pivot shaft 133 abuts against the lower end wall of the guide sliding groove 51 for blocking and limiting cooperation when the carry cot is in the folded use state, providing a clear folding stopping position for the front joint block 131 and ensuring the folded use state is stable.

As shown in FIGS. 1-5, the front linkage assembly 3, the front frame 11, and the front base frame 21 are connected to form a parallel four-bar mechanism, and/or the rear linkage assembly 4, the rear frame 12, and the rear base frame 23 are connected to form a parallel four-bar mechanism when the carry cot is in the unfolded use state. The present embodiment utilizes the front linkage assembly and the rear linkage assembly to be connected with the frame assembly and the base frame assembly to form at least one set of parallel four-bar mechanisms, and utilizes the collaborative linkage member provided between the front base frame and the rear base frame to respectively achieve collaborative linkage in vertical and horizontal folding and unfolding actions, leading to efficient, stable, and convenient folding and unfolding operations.

As shown in FIGS. 1-5, in order to constrain the motion trajectory of the base frame, ensuring smooth and steady folding and unfolding of the carry cot, the front linkage assembly 3 includes a first front linkage rod 31 and a second front linkage rod 32 arranged parallel to each other, the upper ends of the first front linkage rod 31 and the second front linkage rod 32 are both rotatably connected to the front frame 11, the lower ends of the first front linkage rod 31 and the second front linkage rod 32 are both rotatably connected to the front base frame 21; the first front linkage rod 31, the second front linkage rod 32, the front frame 11, and the front base frame 21 are connected to form a parallel four-bar mechanism when the carry cot is in the unfolded use state; the rear linkage assembly 4 includes a rear linkage rod 41, the upper end of the rear linkage rod 41 is rotatably connected to the rear frame 12, the lower end of the rear linkage rod 41 is rotatably connected to the rear base frame 23.

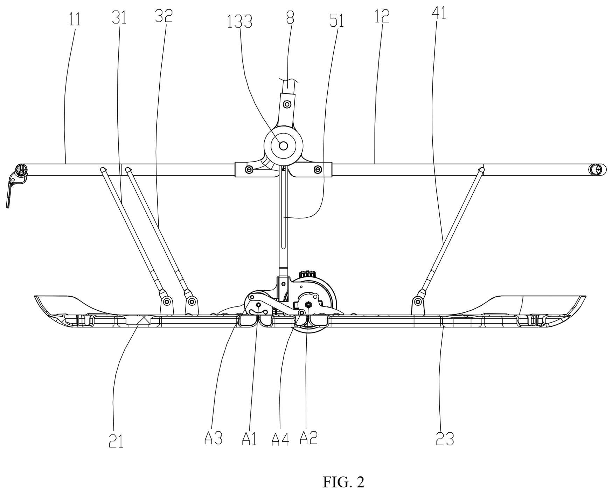

In some embodiments, the angle between the first front linkage rod 31 and the front frame 11 is equal to the angle between the rear linkage rod 41 and the rear frame 12. As shown in FIG. 2, the front linkage assembly 3 is arranged to incline forward from bottom to top, and the rear linkage assembly 4 is arranged to incline backward from bottom to top.

As shown in FIGS. 1-6, a collaborative linkage member 24 is provided between the front base frame 21 and the rear base frame 23, the front end of the collaborative linkage member 24 is rotatably connected to the front base frame 21 around a third pivot shaft A3 eccentric to the first pivot shaft A1, and the rear end of the collaborative linkage member 24 is rotatably connected to the rear base frame 23 around a fourth pivot shaft A4 eccentric to the second pivot shaft A2. The collaborative linkage member synchronously links the folding and unfolding actions of the base frame assembly, enabling the front base frame and the rear base frame to move synchronously, further enhancing the smooth folding and unfolding performance of the carry cot.

In the present embodiment, through the cooperation of the front linkage assembly, the collaborative linkage member, and the rear linkage assembly, the folding and unfolding actions of the frame assembly and the base frame assembly are collaboratively linked; that is, the user only needs to operate the corresponding folding action on the front frame, the front frame links the corresponding folding action of the front base frame through the front linkage assembly, the front base frame links the corresponding folding action of the rear base frame through the collaborative linkage member, and the rear base frame links the corresponding folding action of the rear frame through the rear linkage assembly, achieving one-hand folding, meeting the user's need for quick storage, and significantly improving usability.

In order to reduce manufacturing costs while ensuring reliable connection, the front base frame 21, the base frame connecting seat 22, and the rear base frame 23 are all integrally injection-molded from plastic, the front base frame 21 is rotatably connected to the base frame connecting seat 22 via a front metal connecting seat 211, the rear base frame 23 is rotatably connected to the base frame connecting seat 22 via a rear metal connecting seat 231, and the collaborative linkage member 24 is a metal sheet, ensuring reliable linkage and a stable structure.

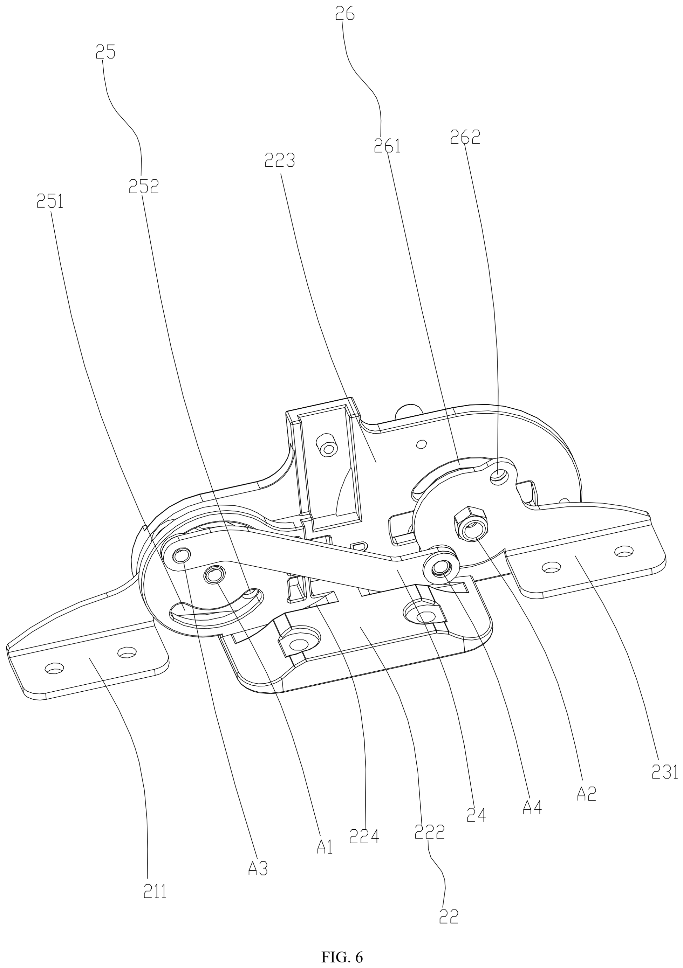

As shown in FIG. 6, in order to achieve collaborative improvement in structural strength, folding and unfolding smoothness, positioning reliability, and usage safety for the present disclosure, the base frame connecting seat 22 includes a base frame connecting bottom portion 222 and a base frame connecting side portion 223 vertically connected to the base frame connecting bottom portion 222, the front base frame 21 is rotatably connected to the base frame connecting side portion 223 via a front metal connecting seat 211, the rear base frame 23 is rotatably connected to the base frame connecting side portion 223 via a rear metal connecting seat 231, the lower end of the vertical slide rod 5 is relatively fixedly connected to the base frame connecting side portion 223, a positioning recess 224 is provided on the base frame connecting bottom portion 222, configured for the collaborative linkage member 24 to snap into and position, and the two base frame connecting bottom portions 222 are connected via a connecting base plate. The base frame connecting seat 22 forms a quasi-right-angle support structure through the vertically arranged base frame connecting bottom portion 222 and the base frame connecting side portion 223, forming a load-bearing frame with better mechanical performance, which may effectively disperse the loads transmitted from the front base frame 21, the rear base frame 23, and the vertical slide rod 5, avoiding deformation or fracture of the base frame connecting seat due to excessive unilateral force, and significantly improving the stability and safety of the base frame assembly 2 in the unfolded use state.

As shown in FIGS. 1-6, in order to stably constrain the motion trajectories of the front base frame and the rear base frame, a front guiding assembly 25 is provided between the front base frame 21 and the base frame connecting seat 22, the front guiding assembly 25 includes a front guiding groove 251 provided on the base frame connecting seat 22 and concentrically arranged with the first pivot shaft A1, and a front guiding rod 252 provided on the front base frame 21 and slidably connected to the front guiding groove 251; and/or, a rear guiding assembly 26 is provided between the rear base frame 23 and the base frame connecting seat 22, the rear guiding assembly 26 includes a rear guiding groove 261 provided on the base frame connecting seat 22 and concentrically arranged with the second pivot shaft A2, and a rear guiding rod 262 provided on the rear base frame 23 and slidably connected to the rear guiding groove 261.

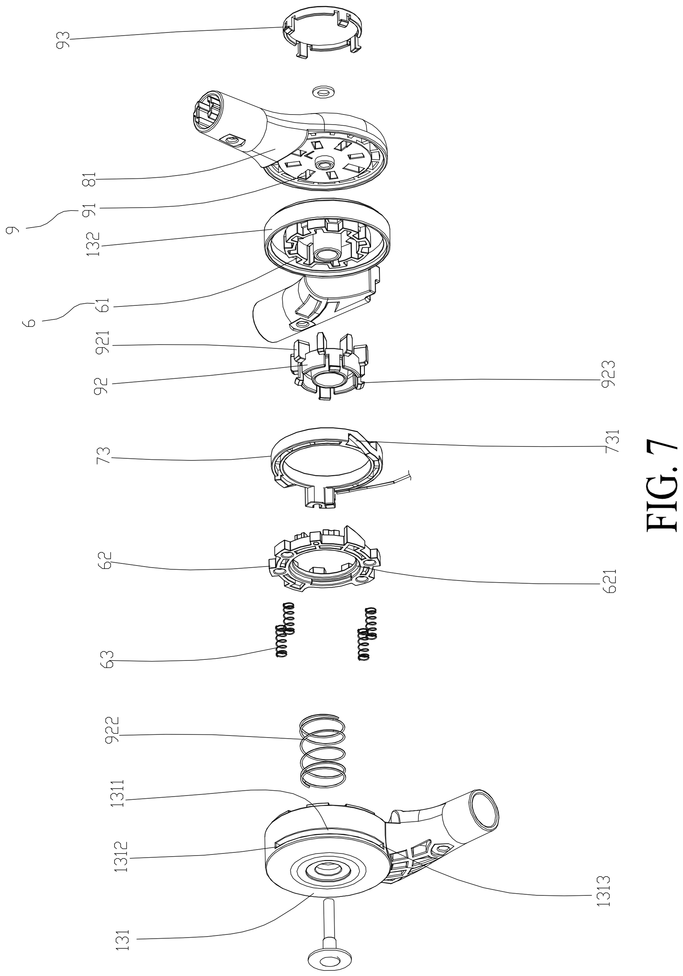

As shown in FIGS. 7-8, in order to achieve reliable locking and convenient unlocking, a joint locking assembly 6 is provided between the front joint block 131 and the rear joint block 132, configured to mutually lock the two, and a joint unlocking assembly 7 is provided on the frame assembly 1 and arranged to be linked with the joint locking assembly 6. Specifically, the joint locking assembly 6 includes joint locking tooth grooves 61 provided on the opposite sides of the front joint block 131 and the rear joint block 132, and a joint locking gear 62 slidably provided between the front joint block 131 and the rear joint block 132 and configured to simultaneously engage with the joint locking tooth grooves 61 on the front joint block 131 and the rear joint block 132; a joint locking elastic member 63 is provided between the joint locking gear 62 and the front joint block 131, configured to drive the joint locking gear 62 to simultaneously engage with the joint locking tooth grooves 61 on the front joint block 131 and the rear joint block 132; the joint locking gear 62 is arranged to be linked with the joint unlocking assembly 7. The joint unlocking assembly 7 includes a joint unlocking operation member 71 movably provided on the front frame 11, and a joint unlocking rotating block 73 rotatably provided between the joint locking gear 62 and the rear joint block 132 and arranged to be linked with the joint locking gear 62; the joint unlocking operation member 71 and the joint unlocking rotating block 73 are linked via a joint unlocking linkage member 72. During unlocking, the user operates the joint unlocking operation member 71 to move relative to the front frame 11, the joint unlocking operation member 71 drives the joint unlocking rotating block 73 to rotate accordingly through the joint unlocking linkage member 72, and the joint unlocking rotating block 73 drives the joint locking gear 62 to slide accordingly through two cooperating unlocking inclined portions 731, until the joint locking gear 62 is separated from the joint locking tooth groove 61 of the rear joint block 132.

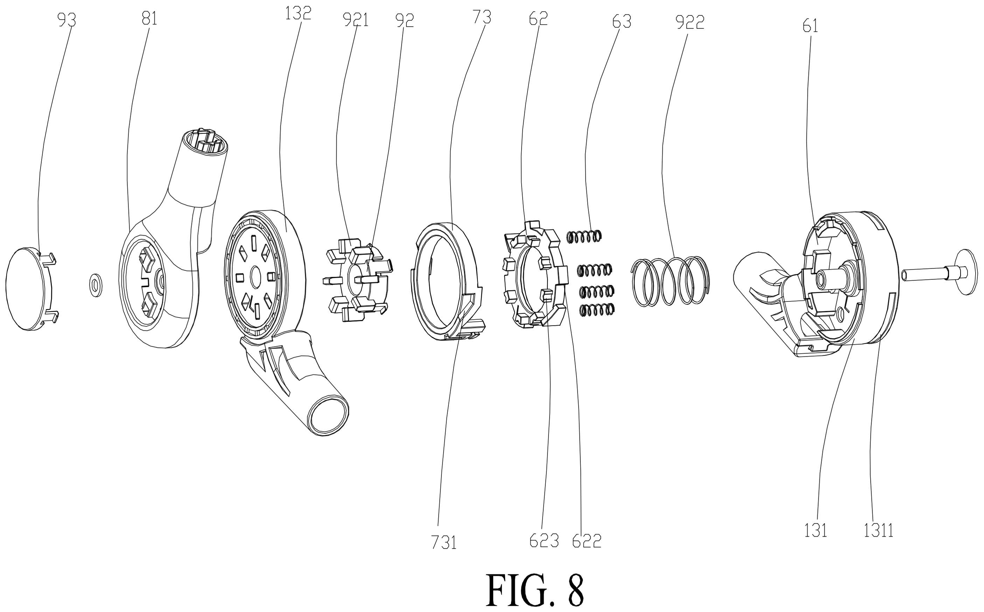

As shown in FIGS. 7 and 8, in the present embodiment, the joint locking gear 62 is provided with a joint locking tooth portion 622 configured to lockingly engage with the joint locking tooth groove 61 of the front joint block 131, and a joint locking protrusion portion 623 configured to lockingly engage with the joint locking tooth groove 61 of the rear joint block 132.

In some embodiments, the joint locking assembly 6 is configured to lock the front joint block 131 and the rear joint block 132 when the carry cot is in both the unfolded use state and the folded use state.

As shown in FIGS. 1-8, it further includes a canopy support rod 8, the canopy support rod 8 is rotatably connected to the rear joint block 132 via a support rod joint block 81, and a support rod locking assembly 9 is provided between the support rod joint block 81 and the frame joint 13, configured to lock the support rod joint block 81 relative to the rear joint block 132. Specifically, the support rod locking assembly 9 includes a support rod locking tooth groove 91 provided on the support rod joint block 81; the support rod locking assembly 9 further includes a support rod locking slider 92 slidably provided between the rear joint block 132 and the joint locking gear 62 and configured to slide with the joint locking gear 62, a support rod locking tooth block 921 is provided on the support rod locking slider 92, configured to penetrate through the rear joint block 132 and lockingly engage with the support rod locking tooth groove 91, a support rod locking elastic member 922 is provided between the support rod locking slider 92 and the front joint block 131, configured to drive the support rod locking slider 92 to elastically reset; and a support rod unlocking button 93 is movably provided on the outer side of the support rod joint block 81 and arranged to be linked with the support rod locking slider 92. During folding, the user operates the joint unlocking operation member 71 to move relative to the front frame 11, the joint unlocking operation member 71 drives the joint unlocking rotating block 73 to rotate accordingly through the joint unlocking linkage member 72, and the joint unlocking rotating block 73 drives the joint locking gear 62 to slide accordingly through two cooperating unlocking inclined portions 731, until the joint locking gear 62 is separated from the joint locking tooth groove 61 of the rear joint block 132; simultaneously, the joint locking gear 62 engages with the support rod locking slider 92 through the blocking inner ring 621 and the blocking buckle 923 to drive the support rod locking slider 92 to slide accordingly, causing the support rod locking tooth block 921 to separate from the support rod locking tooth groove 91, thereby achieving simple unlocking operation. When only adjusting the inclination angle of the canopy support rod 8, the user only needs to operate the support rod unlocking button 93 to push the support rod locking slider 92 to slide accordingly, causing the support rod locking tooth block 921 to separate from the support rod locking tooth groove 91; at this time, the joint locking gear 62 remains engaged with the joint locking tooth grooves 61 on both the front joint block 131 and the rear joint block 132, thereby achieving simple adjustment and safe and reliable use.

The support rod locking assembly 9 is configured to lock the support rod joint block 81 relative to the rear joint block 132 for multi-angle gear adjustment.

As shown in FIGS. 1-8, the carry cot further includes a canopy support rod 8, the canopy support rod 8 is rotatably connected to the rear joint block 132 via a support rod joint block 81, a support rod locking assembly 9 is provided between the support rod joint block 81 and the frame joint 13, configured to lock the support rod joint block 81 relative to the rear joint block 132; a support rod unlocking button 93 is movably provided on the outer side of the support rod joint block 81 and arranged to be linked with the support rod locking assembly 9; and the joint unlocking assembly 7 is arranged to be linked with the support rod locking assembly 9. The joint unlocking assembly is linked with the joint locking assembly and the support rod locking assembly, and the support rod unlocking button is linked with the support rod locking assembly. That is, when the user folds the carry cot, the user only needs to operate the joint unlocking assembly to simultaneously unlock the joint locking assembly and the support rod locking assembly, releasing the locked state between the front joint block, the rear joint block, and the support rod joint block for folding after unlocking; when it is necessary to adjust the canopy support rod, the user only needs to operate the support rod unlocking button to unlock the support rod locking assembly, releasing the locked state of the support rod joint block relative to the rear joint block, thereby leading to convenient operation.

As shown in FIG. 1, in order to facilitate disassembly and assembly, the base frame connecting seat 22 is relatively fixedly connected to a carry cot adapter 221 configured to be detachably connected to a stroller frame adapter 110 of the stroller frame 100.

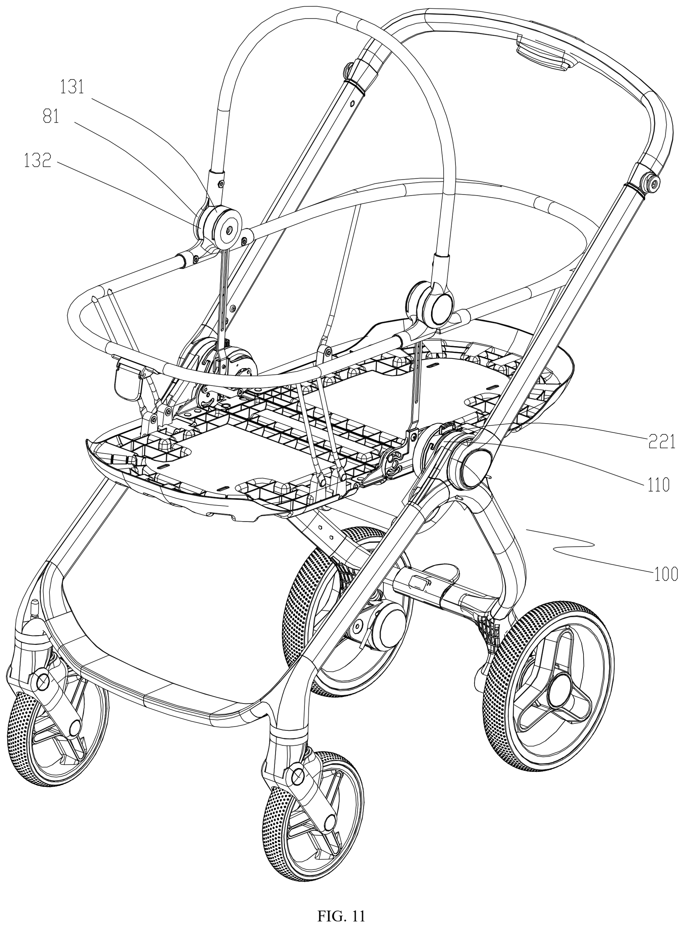

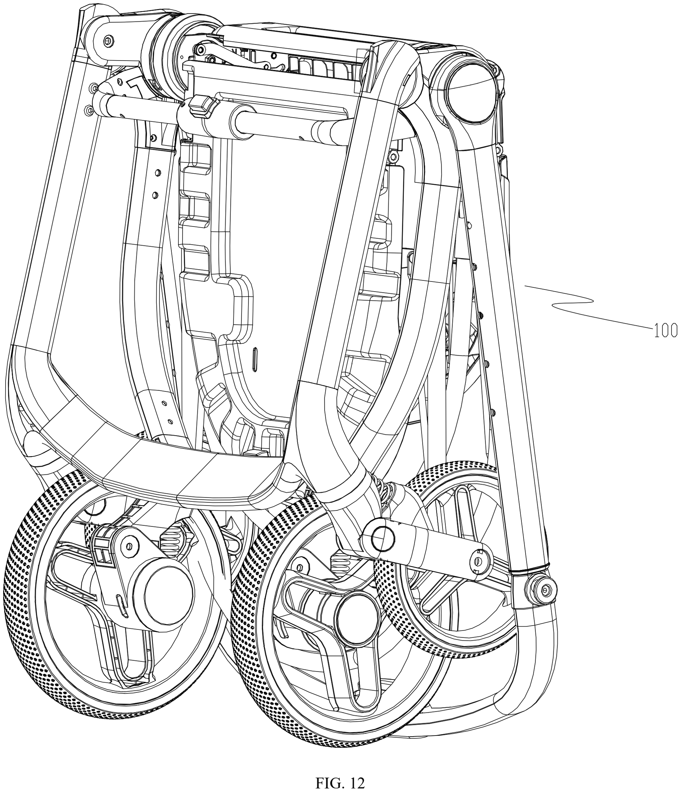

As shown in FIGS. 11 and 12, the present disclosure discloses a child stroller, including a foldable stroller frame 100 and the collaboratively foldable and unfoldable carry cot as described above, a stroller frame adapter 110 is provided on the stroller frame 100, and a carry cot adapter 221 is provided on the base frame connecting seat 22, configured to be detachably connected to the stroller frame adapter 110. By integrating the carry cot onto the stroller frame, it thereby leads to a concise structure, smooth folding and unfolding, and a small overall volume after folding.

## Claims

1. A collaboratively foldable and unfoldable carry cot, having an unfolded use state and a folded use state, comprising:
a frame assembly, wherein the frame assembly comprises a front frame and a rear frame configured to be folded towards each other or unfolded away from each other, the front frame and the rear frame are rotatably connected via a frame joint, the frame joint comprises a front joint block fixedly connected to the front frame and a rear joint block fixedly connected to the rear frame and rotatably connected to the front joint block;
a base frame assembly, wherein the base frame assembly comprises a front base frame, a base frame connecting seat, and a rear base frame, a front side of the base frame connecting seat is rotatably connected to the front base frame around a first pivot shaft, a rear side of the base frame connecting seat is rotatably connected to the rear base frame around a second pivot shaft;
a front linkage assembly, wherein the front linkage assembly is rotatably connected to the front frame and the front base frame respectively;
a rear linkage assembly, wherein the rear linkage assembly is rotatably connected to the rear frame and the rear base frame respectively; and
a vertical slide rod, wherein the vertical slide rod is located between the frame assembly and the base frame assembly, a lower end of the vertical slide rod is relatively fixedly connected to the base frame connecting seat, a joint avoidance slot is directly or indirectly provided on the front joint block or the rear joint block, configured to rotatably and slidably connect with the vertical slide rod; the front joint block and the rear joint block rotate together with the corresponding frame assembly around a joint pivot shaft of the frame joint, and the front joint block or the rear joint block having the joint avoidance slot both rotates relative to the vertical slide rod and slides relative to the vertical slide rod, when the carry cot is switched between the unfolded use state and the folded use state.

2. The collaboratively foldable and unfoldable carry cot according to claim 1, wherein the joint avoidance slot is provided with an unfolding stopping wall and a folding stopping wall configured to abut against a corresponding side wall of the vertical slide rod; the carry cot is in the unfolded use state when a side wall of the vertical slide rod abuts against the unfolding stopping wall, and the carry cot is in the folded use state when an opposite side wall of the vertical slide rod abuts against the folding stopping wall.

3. The collaboratively foldable and unfoldable carry cot according to claim 1, wherein a guide sliding groove is provided on the vertical slide rod and extends along a length direction thereof, the joint pivot shaft between the front joint block and the rear joint block is inserted through the guide sliding groove and is slidable within the guide sliding groove.

4. The collaboratively foldable and unfoldable carry cot according to claim 1, wherein the front linkage assembly, the front frame, and the front base frame are connected to form a parallel four-bar mechanism, and/or the rear linkage assembly, the rear frame, and the rear base frame are connected to form a parallel four-bar mechanism, when the carry cot is in the unfolded use state

5. The collaboratively foldable and unfoldable carry cot according to claim 1, wherein the front linkage assembly comprises a first front linkage rod and a second front linkage rod arranged parallel to each other, upper ends of the first front linkage rod and the second front linkage rod are both rotatably connected to the front frame, lower ends of the first front linkage rod and the second front linkage rod are both rotatably connected to the front base frame; the first front linkage rod, the second front linkage rod, the front frame, and the front base frame are connected to form a parallel four-bar mechanism when the carry cot is in the unfolded use state; the rear linkage assembly comprises a rear linkage rod, an upper end of the rear linkage rod is rotatably connected to the rear frame, a lower end of the rear linkage rod is rotatably connected to the rear base frame.

6. The collaboratively foldable and unfoldable carry cot according to claim 1, wherein a collaborative linkage member is provided between the front base frame and the rear base frame, the front end of the collaborative linkage member is rotatably connected to the front base frame around a third pivot shaft eccentric to the first pivot shaft, the rear end of the collaborative linkage member is rotatably connected to the rear base frame around a fourth pivot shaft eccentric to the second pivot shaft.

7. The collaboratively foldable and unfoldable carry cot according to claim 1, wherein a front guiding assembly is provided between the front base frame and the base frame connecting seat, the front guiding assembly comprises a front guiding groove provided on the base frame connecting seat and concentrically arranged with the first pivot shaft, and a front guiding rod provided on the front base frame and slidably connected to the front guiding groove; and/or,
a rear guiding assembly is provided between the rear base frame and the base frame connecting seat, the rear guiding assembly comprises a rear guiding groove provided on the base frame connecting seat and concentrically arranged with the second pivot shaft, and a rear guiding rod provided on the rear base frame and slidably connected to the rear guiding groove.

8. The collaboratively foldable and unfoldable carry cot according to claim 1, wherein a joint locking assembly is provided between the front joint block and the rear joint block, configured to mutually lock the front joint block and the rear joint block, and a joint unlocking assembly is provided on the frame assembly and arranged to be linked with the joint locking assembly.

9. The collaboratively foldable and unfoldable carry cot according to claim 8, wherein the joint locking assembly comprises joint locking tooth grooves provided on opposite sides of the front joint block and the rear joint block, and a joint locking gear slidably provided between the front joint block and the rear joint block and configured to simultaneously engage with the joint locking tooth grooves on the front joint block and the rear joint block; a joint locking elastic member is provided between the joint locking gear and the front joint block, configured to drive the joint locking gear to simultaneously engage with the joint locking tooth grooves on the front joint block and the rear joint block; the joint locking gear is arranged to be linked with the joint unlocking assembly.

10. The collaboratively foldable and unfoldable carry cot according to claim 9, wherein the joint unlocking assembly comprises a joint unlocking operation member movably provided on the front frame, and a joint unlocking rotating block rotatably provided between the joint locking gear and the rear joint block and arranged to be linked with the joint locking gear; the joint unlocking operation member and the joint unlocking rotating block are linked via a joint unlocking linkage member.

11. The collaboratively foldable and unfoldable carry cot according to claim 9, further comprising a canopy support rod, the canopy support rod is rotatably connected to the rear joint block via a support rod joint block, and a support rod locking assembly is provided between the support rod joint block and the frame joint, configured to lock the support rod joint block relative to the rear joint block.

12. The collaboratively foldable and unfoldable carry cot according to claim 11, wherein the support rod locking assembly comprises a support rod locking tooth groove provided on the support rod joint block; the support rod locking assembly further comprises a support rod locking slider slidably provided between the rear joint block and the joint locking gear and configured to slide with the joint locking gear, a support rod locking tooth block is provided on the support rod locking slider, configured to penetrate through the rear joint block and lockingly engage with the support rod locking tooth groove, a support rod locking elastic member is provided between the support rod locking slider and the front joint block, configured to drive the support rod locking slider to elastically reset; and a support rod unlocking button is movably provided on the outer side of the support rod joint block and arranged to be linked with the support rod locking slider.

13. The collaboratively foldable and unfoldable carry cot according to claim 8, further comprising a canopy support rod, the canopy support rod is rotatably connected to the rear joint block via a support rod joint block, a support rod locking assembly is provided between the support rod joint block and the frame joint, configured to lock the support rod joint block relative to the rear joint block; a support rod unlocking button is movably provided on the outer side of the support rod joint block and arranged to be linked with the support rod locking assembly; and the joint unlocking assembly is arranged to be linked with the support rod locking assembly.

14. The collaboratively foldable and unfoldable carry cot according to claim 1, wherein the base frame connecting seat is relatively fixedly connected to a carry cot adapter configured to be detachably connected to a stroller frame adapter of a stroller frame.

15. A baby stroller, comprising a foldable stroller frame and the collaboratively foldable and unfoldable carry cot according to claim 1, a stroller frame adapter is provided on the stroller frame, and a carry cot adapter is provided on the base frame connecting seat, configured to be detachably connected to the stroller frame adapter.

## Amended claims

### Amended claims in accordance with Rule 137(2) EPC.

1. A collaboratively foldable and unfoldable carry cot, having an unfolded use state and a folded use state, comprising:
a frame assembly (1), wherein the frame assembly (1) comprises a front frame (11) and a rear frame (12) configured to be folded towards each other or unfolded away from each other, the front frame (11) and the rear frame (12) are rotatably connected via a frame joint (13);
a base frame assembly (2), wherein the base frame assembly (2) comprises a front base frame (21), a base frame connecting seat (22), and a rear base frame (23), a front side of the base frame connecting seat (22) is rotatably connected to the front base frame (21) around a first pivot shaft (A1), a rear side of the base frame connecting seat (22) is rotatably connected to the rear base frame (23) around a second pivot shaft (A2);
a front linkage assembly (3), wherein the front linkage assembly (3) is rotatably connected to the front frame (11) and the front base frame (21) respectively;
a rear linkage assembly (4), wherein the rear linkage assembly (4) is rotatably connected to the rear frame (12) and the rear base frame (23) respectively; and
a vertical slide rod (5), wherein the vertical slide rod (5) is located between the frame assembly (1) and the base frame assembly (2), a lower end of the vertical slide rod (5) is relatively fixedly connected to the base frame connecting seat (22), **characterized in that** the frame joint (13) comprises a front joint block (131) fixedly connected to the front frame (11) and a rear joint block (132) fixedly connected to the rear frame (12) and rotatably connected to the front joint block (131); a joint avoidance slot (1311) is directly or indirectly provided on the front joint block (131) or the rear joint block (132), configured to rotatably and slidably connect with the vertical slide rod (5); the front joint block (131) and the rear joint block (132) rotate together with the corresponding frame assembly (1) around a joint pivot shaft (133) of the frame joint (13), and the front joint block (131) or the rear joint block (132) having the joint avoidance slot (1311) both rotates relative to the vertical slide rod (5) and slides relative to the vertical slide rod (5), when the carry cot is switched between the unfolded use state and the folded use state; and the joint avoidance slot (1311) is provided with an unfolding stopping wall (1312) and a folding stopping wall (1313) configured to abut against a corresponding side wall of the vertical slide rod (5); the carry cot is in the unfolded use state when a side wall of the vertical slide rod (5) abuts against the unfolding stopping wall (1312), and the carry cot is in the folded use state when an opposite side wall of the vertical slide rod (5) abuts against the folding stopping wall (1313).

2. The collaboratively foldable and unfoldable carry cot according to claim **1,** wherein a guide sliding groove (51) is provided on the vertical slide rod (5) and extends along a length direction thereof, the joint pivot shaft (133) between the front joint block (131) and the rear joint block (132) is inserted through the guide sliding groove (51) and is slidable within the guide sliding groove (51).

3. The collaboratively foldable and unfoldable carry cot according to claim 1, wherein the front linkage assembly (3), the front frame (11), and the front base frame (21) are connected to form a parallel four-bar mechanism, and/or the rear linkage assembly (4), the rear frame (12), and the rear base frame (23) are connected to form a parallel four-bar mechanism, when the carry cot is in the unfolded use state.

4. The collaboratively foldable and unfoldable carry cot according to claim 1, wherein the front linkage assembly (3) comprises a first front linkage rod (31) and a second front linkage rod (32) arranged parallel to each other, upper ends of the first front linkage rod (31) and the second front linkage rod (32) are both rotatably connected to the front frame (11), lower ends of the first front linkage rod (31) and the second front linkage rod (32) are both rotatably connected to the front base frame (21); the first front linkage rod (31), the second front linkage rod (32), the front frame (11), and the front base frame (21) are connected to form a parallel four-bar mechanism when the carry cot is in the unfolded use state; the rear linkage assembly (4) comprises a rear linkage rod (41), an upper end of the rear linkage rod (41) is rotatably connected to the rear frame (12), a lower end of the rear linkage rod (41) is rotatably connected to the rear base frame (23).

5. The collaboratively foldable and unfoldable carry cot according to claim 1, wherein a collaborative linkage member (24) is provided between the front base frame (21) and the rear base frame (23), the front end of the collaborative linkage member (24) is rotatably connected to the front base frame (21) around a third pivot shaft (A3) eccentric to the first pivot shaft (A1), the rear end of the collaborative linkage member (24) is rotatably connected to the rear base frame (23) around a fourth pivot shaft (A4) eccentric to the second pivot shaft (A2).

6. The collaboratively foldable and unfoldable carry cot according to claim 1, wherein a front guiding assembly (25) is provided between the front base frame (21) and the base frame connecting seat (22), the front guiding assembly (25) comprises a front guiding groove (251) provided on the base frame connecting seat (22) and concentrically arranged with the first pivot shaft (A1), and a front guiding rod (252) provided on the front base frame (21) and slidably connected to the front guiding groove (251); and/or,
a rear guiding assembly (26) is provided between the rear base frame (23) and the base frame connecting seat (22), the rear guiding assembly (26) comprises a rear guiding groove (261) provided on the base frame connecting seat (22) and concentrically arranged with the second pivot shaft (A2), and a rear guiding rod (262) provided on the rear base frame (23) and slidably connected to the rear guiding groove (261).

7. The collaboratively foldable and unfoldable carry cot according to claim 1, wherein a joint locking assembly (6) is provided between the front joint block (131) and the rear joint block (132), configured to mutually lock the front joint block (131) and the rear joint block (132), and a joint unlocking assembly (7) is provided on the frame assembly (1) and arranged to be linked with the joint locking assembly (6).

8. The collaboratively foldable and unfoldable carry cot according to claim 7, wherein the joint locking assembly (6) comprises joint locking tooth grooves (61) provided on opposite sides of the front joint block (131) and the rear joint block (132), and a joint locking gear (62) slidably provided between the front joint block (131) and the rear joint block (132) and configured to simultaneously engage with the joint locking tooth grooves (61) on the front joint block (131) and the rear joint block (132); a joint locking elastic member (63) is provided between the joint locking gear (62) and the front joint block (131), configured to drive the joint locking gear (62) to simultaneously engage with the joint locking tooth grooves (61) on the front joint block (131) and the rear joint block (132); the joint locking gear (62) is arranged to be linked with the joint unlocking assembly (7).

9. The collaboratively foldable and unfoldable carry cot according to claim 8, wherein the joint unlocking assembly (7) comprises a joint unlocking operation member (71) movably provided on the front frame (11), and a joint unlocking rotating block (73) rotatably provided between the joint locking gear (62) and the rear joint block (132) and arranged to be linked with the joint locking gear (62); the joint unlocking operation member (71) and the joint unlocking rotating block (73) are linked via a joint unlocking linkage member (72).

10. The collaboratively foldable and unfoldable carry cot according to claim 8, further comprising a canopy support rod (8), the canopy support rod (8) is rotatably connected to the rear joint block (132) via a support rod joint block (81), and a support rod locking assembly (9) is provided between the support rod joint block (81) and the frame joint (13), configured to lock the support rod joint block (81) relative to the rear joint block (132).

11. The collaboratively foldable and unfoldable carry cot according to claim 10, wherein the support rod locking assembly (9) comprises a support rod locking tooth groove (91) provided on the support rod joint block (81); the support rod locking assembly (9) further comprises a support rod locking slider (92) slidably provided between the rear joint block (132) and the joint locking gear (62) and configured to slide with the joint locking gear (62), a support rod locking tooth block (921) is provided on the support rod locking slider (92), configured to penetrate through the rear joint block (132) and lockingly engage with the support rod locking tooth groove (91), a support rod locking elastic member (922) is provided between the support rod locking slider (92) and the front joint block (131), configured to drive the support rod locking slider (92) to elastically reset; and a support rod unlocking button (93) is movably provided on the outer side of the support rod joint block (81) and arranged to be linked with the support rod locking slider (92).

12. The collaboratively foldable and unfoldable carry cot according to claim 7, further comprising a canopy support rod (8), the canopy support rod (8) is rotatably connected to the rear joint block (132) via a support rod joint block (81), a support rod locking assembly (9) is provided between the support rod joint block (81) and the frame joint (13), configured to lock the support rod joint block (81) relative to the rear joint block (132); a support rod unlocking button (93) is movably provided on the outer side of the support rod joint block (81) and arranged to be linked with the support rod locking assembly (9); and the joint unlocking assembly (7) is arranged to be linked with the support rod locking assembly (9).

13. The collaboratively foldable and unfoldable carry cot according to claim 1, wherein the base frame connecting seat (22) is relatively fixedly connected to a carry cot adapter (221) configured to be detachably connected to a stroller frame adapter (110) of a stroller frame (100).

14. A baby stroller, comprising a foldable stroller frame (100) and the collaboratively foldable and unfoldable carry cot according to claim 1, a stroller frame adapter (110) is provided on the stroller frame (100), and a carry cot adapter (221) is provided on the base frame connecting seat (22), configured to be detachably connected to the stroller frame adapter (110).
